# EUROPÄISCHE PATENTSCHRIFT

(11) **EP 2 700 868 B1**
(45) Veröffentlichungstag und Bekanntmachung des Hinweises auf die Patenterteilung: **25.12.2019**
(21) Anmeldenummer: 13000917.8
(22) Anmeldetag: 23.02.2013
(51) Int. Cl.: F21S 43/20, F21S 43/00, F21S 43/31, F21S 43/40, G02B 19/00, F21V 5/04, G02B 3/00

(54) **Optikkörper für eine Fahrzeugleuchte**
Optical body for a vehicle lamp
Corps d'optique pour une lampe de véhicule

(30) Priorität: 21.08.2012 DE 102012107676
(43) Veröffentlichungstag der Anmeldung: 26.02.2014
(73) Patentinhaber: Truck-Lite Europe GmbH, 99817 Eisenach (DE)
(72) Erfinder: Günther, Thilo, 99848 Wutha-Farnroda (DE)
(74) Vertreter: Strasser, Wolfgang

(56) Entgegenhaltungen:
- EP-A2- 0 635 744
- JP-A- 2006 092 485
- JP-A- 2010 205 606
- US-A1- 2006 291 201
- US-A1- 2010 046 242
- US-B2- 7 207 700

## Beschreibung

Die Erfindung betrifft einen Optikkörper gemäß dem Oberbegriff von Anspruch 1 sowie eine mit wenigstens einem derartigen Optikkörper ausgerüstete Fahrzeugleuchte gemäß Anspruch 15.

Optikkörper der eingangs genannten Art sind beispielsweise aus der DE 10 2004 026 530 B3 bekannt. Es handelt sich dabei um aus einem lichtleitenden Material bestehende, flache, plattenförmige Körper mit zwei Hauptflächen, die sich in etwa parallel zu einer durch X,Z-Koordinaten aufgespannten Hauptzentralebene erstrecken, von der sie in der zu den X,Z-Koordinaten senkrechten Y-Richtung gleiche Abstände aufweisen, und deren Vertikalprojektionen (in Y-Richtung) auf die X,Z-Ebene deckungsgleich sind. Diese bekannten Optikkörper besitzen jeweils einen Basisteil, der eine zylindrische Ausnehmung aufweist, in welche ein Leuchtmittel, beispielsweise eine LED so weit eingeführt werden kann, dass das von ihr in einen kegelförmigen Raumwinkelbereich abgegebene Licht praktisch vollständig in den Optikkörper eintritt, wobei der von der LED abgegebene Lichtkegel und die Ausnehmung eine gemeinsame parallel zur Z-Richtung verlaufende Zentralachse besitzen. Der Lichteintritt erfolgt teilweise über die innere, zylindrische Umfangswand und teilweise über die der LED gegenüberliegende Deckenfläche der Ausnehmung, wobei in dieser Deckenfläche eine Sammeloptik ausgebildet ist. Der Optikkörper ist bezüglich der durch die Zentralachse verlaufenden zur X,Z-Ebene senkrechten Ebene spiegelsymmetrisch und in etwa V-förmig ausgebildet, so dass er zwei sich in Lichtausbreitungsrichtung und von der Zentralachse weg erstreckende Arme besitzt, deren die Hauptflächen miteinander verbindenden Seitenflächen dazu dienen, insbesondere das durch die innere Seitenwand der Ausnehmung eingetretene Licht durch Totalreflexion in X-Richtung zu verteilen und in Z-Richtung weiterzuleiten. Die V-Schenkel des Optikkörpers weisen auf ihrer die Hauptflächen miteinander verbindenden Lichtabstrahlfläche zusätzliche Optikelemente auf, um das hier in das Medium Luft austretende Licht über einen möglichst breiten Bereich zu verteilen. Mehrere solche Optikkörper können so miteinander verbunden werden, dass ihre Hauptzentralebenen miteinander fluchten und sich zwei benachbarte Optikkörper im Bereich der Spitzen ihrer V-Schenkel berühren. Für eine solche mehrere Optikkörper umfassende Anordnung ist eine allen Optikkörpern gemeinsame Vorsatzoptik vorgesehen, die durch eine Luftstrecke von den Lichtabstrahlflächen der Optikkörper getrennt ist und mit deren Hilfe die eigentlich angestrebte Lichtfunktion der jeweiligen Fahrzeugleuchte erzielt wird, in welche die Optikkörperanordnung eingebaut werden soll.

Die bekannten Optikkörper haben eine Reihe von Nachteilen:
- Es ergeben sich vergleichsweise lange Lichtwege in dem lichtleitenden Medium, und das Licht muss insgesamt durch vier Grenzflächen (zwei eines jeden Optikkörpers und zwei der Vorsatzoptik) hindurchtreten. Somit entstehen Lichtverluste.
- Fertigungstechnische Schwierigkeiten ergeben sich insbesondere dann, wenn man versucht, die Vorsatzoptik einstückig mit dem oder den Optikkörpern auszubilden. Stellt man die Vorsatzoptik als selbständiges Bauteil her, erhöht sich der Montageaufwand.
- Sowohl die einzelnen Optikkörper als auch die Vorsatzoptik müssen hinsichtlich ihrer geometrischen Formgebung an die jeweils angestrebte Lichtfunktion angepasst werden.
- Da der Scheitelpunkt des von einer LED abgestrahlten Lichtkegels von der mit Rückseite der Optikkörper fest zu verbindenden Montagebasis der LED, im allgemeinen einer gedruckten Schaltungsplatine, in Richtung der Zentralachse je nach LED-Typ einen anderen Abstand aufweist, müssen die optisch aktiven Flächen der Optikelemente, die das in den Optikkörper eintretende Licht parallelisieren und zur Abstrahlseite hin weiterleiten sollen, an den jeweilige LED-Typ angepasst werden.

Insbesondere das Erfordernis, die Optikkörper sowohl an die zu erzielende Lichtfunktion als auch an die verwendeten LEDs anpassen zu müssen, führt zu einer erheblichen Verteuerung ihrer Herstellung.

Gleiches gilt auch für den aus der Druckschrift US 7,207,700 B2 bekannten Optikkörper, der eine für Fahrzeugleuchten geeignete Nahfeld-Linse bildet, die einen Zentralkörper und zwei sich an diesen anschließende Seitenkörper umfasst, die bezüglich einer mit der Hauptabstrahlungsrichtung einer zugehörigen Lichtquelle zusammenfallenden Längsachse einander gegenüberliegend angeordnet sind und eine rotationssymmetrische Ausnehmung umschließen, die zur Aufnahme einer die Lichtquelle bildenden LED vorgesehen ist.

Sowohl der Zentralkörper als auch die beiden Seitenkörper sind jeweils in Art einer Fresnel-Linse mit einer Vielzahl von stufenförmig gegeneinander abgesetzten Linsen-Teilflächen ausgebildet, die dem Zweck dienen, das von der Lichtquelle ausgehende Licht im wesentlichen nur vertikal bzw. sowohl horizontal als auch vertikal zu kollimieren. Alle diese Linsen-Teilflächen besitzen einen gemeinsamen Brennpunkt, der im Wesentlichen mit dem lichtemittierenden Flächenbereich der Lichtquelle zusammenfällt.

Demgegenüber liegt der Erfindung die Aufgabe zugrunde, ein Optikelement zu schaffen, bei dem weder eine spezielle Anpassung an die gewünschte Lichtfunktion noch an den jeweils verwendeten LED-Typ erforderlich ist.

Zur Lösung dieser Aufgabe sieht die Erfindung die im Anspruch 1 niedergelegten Merkmale vor.

Während beim Stand der Technik die in der Deckenwand der zur Aufnahme der LED dienenden Ausnehmung ausgebildete Optikstruktur eine einheitliche, zur Längsachse rotationssymmetrische Sammellinse ist, wird gemäß der Erfindung vorgesehen, diese Struktur in mehrere, vorzugsweise vier optisch aktive Teilflächen aufzulösen, von denen jede einen eigenen Brennpunkt aufweist, der auf der Längsachse liegt, wobei die Brennpunkte von wenigstens zwei dieser Teilflächen und vorzugsweise aller Teilflächen in Richtung der Längsachse voneinander beabstandet sind.

Entsprechendes gilt auch für die Auflösung der innenliegenden Seitenwand der Ausnehmung in vier einzelne, optisch aktive Teilflächen und der beiden Seitenflächen des Optikkörpers, die das in den Optikkörper eingestrahlte, von innen her auf sie auftreffende Licht durch Totalreflexion zur Lichtabstrahlfläche hin leiten.

Vorzugsweise erhält man also zwölf optisch aktive Teilflächen, von denen jeden einen eigenen Brennpunkt besitzt. Diese Brennpunkte sind perlenschnurartig auf der Längsachse der Ausnehmung mit gegenseitigen Abständen aufgereiht.

Dadurch, dass man sowohl für die an der Deckenfläche der Ausnehmung ausgebildete Optikstruktur als auch die optisch aktiven Teilflächen der Innenwand der Ausnehmung als auch die optisch aktiven Teilflächen der Seitenflächen des Optikkörpers von der Rotationssymmetrie bezüglich der zentralen Längsachse abweicht, gestaltet sich zwar die Ausbildung der zur Herstellung der erfindungsgemäßen Optikkörper dienenden Gussform etwas aufwendiger, doch wird hierdurch der Vorteil erzielt, dass der Scheitelpunkt des von der jeweiligen LED abgestrahlten Lichtkegels innerhalb vergleichsweise weiter Grenzen in Richtung der zentralen Längsachse verschoben werden kann. Damit ist es möglich, verschiedenste LEDs in Verbindung mit einem erfindungsgemäßen Optikkörper zu verwenden.

Ein weiterer Vorteil besteht darin, dass die erfindungsgemäße Optik das Licht über einen großen vertikalen und horizontalen Winkelbereich derart verteilt, dass mit ein und derselben Optikkörperanordnung unterschiedlichste Licht- bzw. Signalfunktionen realisiert werden können, ohne dass eine weitere Vorsatzoptik erforderlich ist.

Beispielsweise lassen sich mit ein und derselben Optikkörperanordnung folgende Signalfunktionen realisieren:
- Stopplichtzusatzbremsleuchte,
- Stopplicht,
- Rücklicht,
- Nebelschlusslicht,
- Rückfahrlicht,
- Blinkleuchte,
- Scheinwerfer,
- Tagfahrlicht,
- Nebelscheinwerfer,
- Seitenmarkierungslicht,
- Positionslicht,
- Innenraumleuchten.

Auch besitzen die erfindungsgemäßen Optikkörper sowohl im eingeschalteten als auch im ausgeschalteten Zustand ein homogenes Erscheinungsbild. Es können große Flächen mit einer minimalen Anzahl von Lichtquellen homogen beleuchtet werden.

Die erwähnten Signalfunktionen lassen sich mit verschiedensten Anbauwinkeln der entsprechend ausgerüsteten Fahrzeugleuchten an dem jeweiligen Fahrzeug realisieren.

Es können mehrere erfindungsgemäße Optikkörper nebeneinander oder übereinander angeordnet werden. Die Optikkörper können linear oder einer Kurve folgend aneinandergereiht oder, bei kleineren Fahrzeugleuchten, einzeln verwendet werden.

Die Erfindung wird im Folgenden anhand eines Ausführungsbeispiels unter Bezugnahme auf die Zeichnung beschrieben; in dieser zeigen:
- Fig. 1: eine schematische, perspektivische Ansicht von drei nebeneinander angeordneten und miteinander verbundenen Optikkörpern gemäß der Erfindung,
- Fig. 2: einen Schnitt durch eine Fahrzeugleuchte, die eine Vielzahl von entsprechend der Fig. 1 angeordneten Optikkörpern umfasst, wobei die Schnittebene mit der Hauptzentralebene der Optikkörper zusammenfällt,
- Fig. 3: in vergrößertem Maßstab einen dem Rahmen III aus Fig. 2 entsprechenden Ausschnitt,
- Fig. 4: einen zur Hauptzentralebene senkrechten Schnitt durch einen erfindungsgemäßen Optikkörper,
- Fig. 5: eine perspektivische Ansicht eines erfindungsgemäßen Optikkörpers von schräg unten,
- Fig. 6: eine schematische Schnittdarstellung entsprechend der Fig. 3 mit eingezeichneten Brennpunkten, und
- Fig. 7: eine schematische Schnittdarstellung entsprechend der Fig. 4 mit eingezeichneten Brennpunkten.

In sämtlichen Figuren sind einander entsprechende bzw. gleiche Teile mit denselben Bezugszeichen bezeichnet. Der Einfachheit halber wird die Seite, von der her das jeweilige Leuchtmittel in die im erfindungsgemäßen Optikkörper vorgesehene Ausnehmung eingeschoben werden kann, als "Unterseite" bezeichnet, so dass die dieser Seite gegenüberliegende Lichtabstrahlfläche 6 die "Oberseite" bildet. Die Begriffe "oben" und "unten" sind jedoch nicht als Einschränkung der möglichen Einbaulagen eines erfindungsgemäßen Optikkörpers zu verstehen.

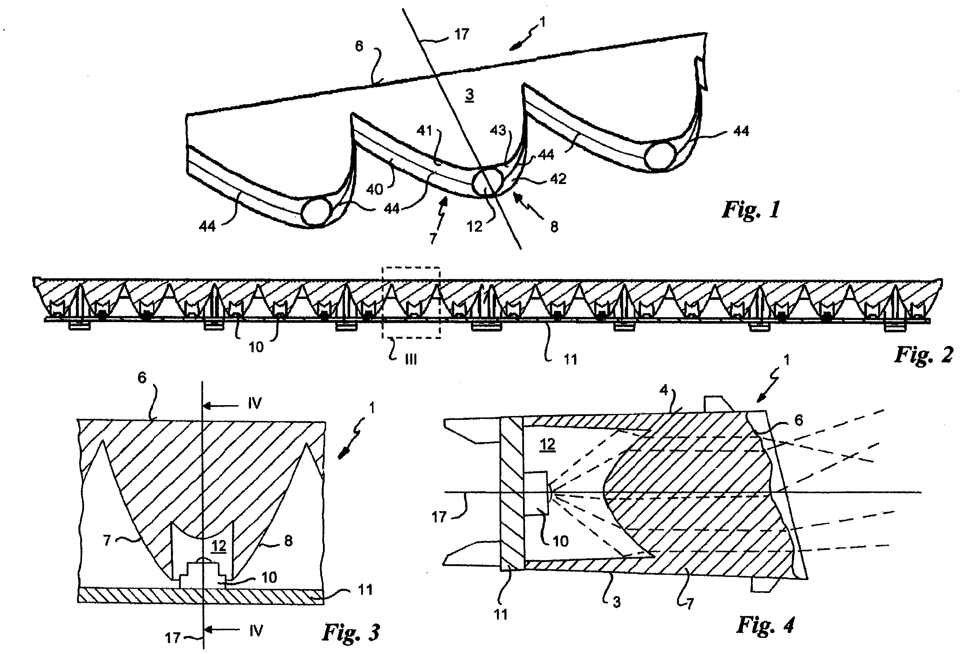

Wie man insbesondere der Figur 1 entnehmen kann, sind die erfindungsgemäßen Optikkörper in etwa plattenförmig ausgebildet, d.h. sie weisen zwei einander bezüglich einer Hauptzentralebene gegenüberliegende, in den Vertikalprojektionen der Figuren 2, 3 und 6 deckungsgleiche Hauptflächen 3, 4 auf, von denen in Figur 1 wegen der perspektivischen Darstellung nur die obere Hauptfläche 3 sichtbar ist.

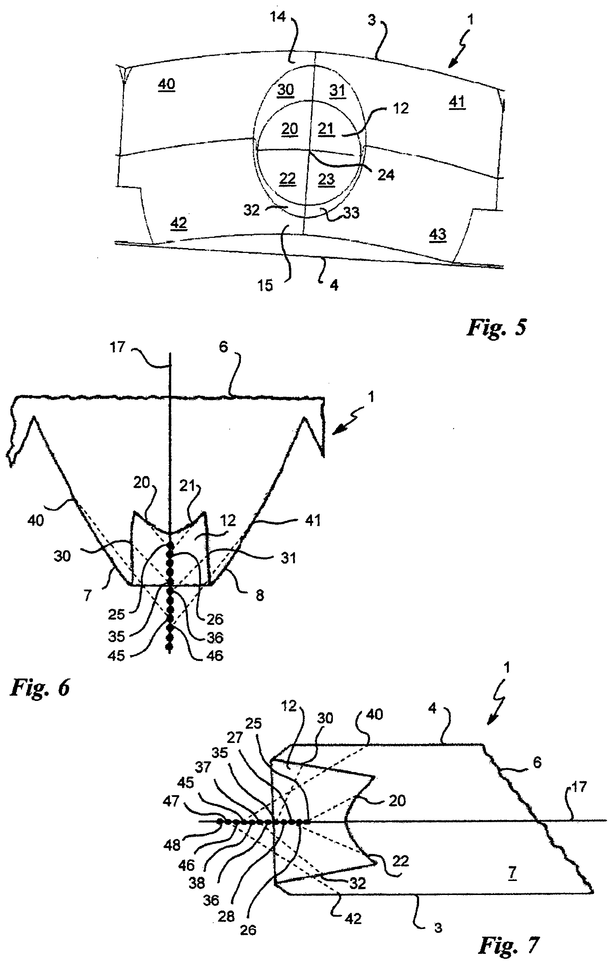

Die Hauptflächen 3 und 4 werden durch Seitenflächen miteinander verbunden, zu denen die Lichtabstrahlfläche 6 gehört, die, wie man insbesondere den Figuren 4 und 7 entnimmt, die beiden Seitenflächen 3, 4, in einem von 90° verschiedenen Winkel schneidet.

Demgegenüber verlaufen die beiden verbleibenden, leicht gewölbten Seitenflächen 7, 8 in etwa senkrecht zu den Hauptflächen 3, 4 und gehen auf der der Lichtabstrahlfläche 6 gegenüberliegenden Seite, d.h. im Bereich der zum Einführen einer LED 10 dienenden Ausnehmung 12 ineinander über. Dabei kann, wie in der Figur 1 gezeigt, die Ausnehmung 12 bis an die Kanten der Hauptflächen 3, 4 heranreichen oder, wie in Figur 5 gezeigt, von diesen Kanten durch schmale Randbereiche 14, 15 getrennt sein.

Die Hauptflächen 3, 4 können eben oder aber auch leicht gewölbt sein. Sie können zueinander parallel oder so verlaufen, dass sie im Bereich der Lichtabstrahlfläche 6 einen etwas größeren Abstand voneinander aufweisen als im Bereich der Ausnehmung 12. Wenn eine solche gegenseitige Neigung vorhanden ist, ist sie sehr klein, so dass insgesamt nur eine geringfügige Abweichung von einer planparallelen Platte vorhanden ist.

Die Ausnehmung 12 hat in etwa die Form eines Kegelstumpfes mit nicht kreisförmigem Querschnitt und einer zentralen Längsachse 17, zu der die Seitenwände des Optikkörpers angrenzend an der Ausnehmung 12 nicht exakt symmetrisch verlaufen, wie im Folgenden noch im Einzelnen erläutert wird.

Wie man insbesondere den Figuren 2 bis 4 entnehmen kann, wird in die Ausnehmung 12 eines jeden Optikkörpers 1 von unten her eine LED 10 so eingeführt, dass die Zentralachse des von ihr abgestrahlten, kegelförmig divergierenden Lichtbündels mit der zentralen Längsachse 17 der Ausnehmung 12 zusammenfällt. Die LED 10 ist auf einer gedruckten Schaltungsplatine 11 montiert, auf der in bekannter Weise die für ihre Stromversorgung und Ansteuerung erforderlichen Leitbahnen ausgebildet sind und die mit dem Optikkörper 1 durch Einrasten verbunden werden kann.

Bei der in Fig. 2 gezeigten Fahrzeugleuchte sind alle LEDs auf einer gemeinsamen Schaltungsplatine 11 montiert, die von den nebeneinander angeordneten und einstückig miteinander verbundenen Optikkörpern 1 getragen wird, die ihrerseits in ein (nicht dargestelltes) Gehäuse eingesetzt werden können, das zur Montage der Fahrzeugleuchte am Fahrzeug dient.

Der Deckenbereich der Ausnehmung 12 wird von einer Optikstruktur gebildet, die eine konvex nach unten in den Innenraum der Ausnehmung 12 hineinragende Oberfläche besitzt, die, wie man insbesondere der Figur 5 entnehmen kann, in vier optisch aktive, bezüglich der zentralen Längsachse 17 nicht rotationssymmetrisch ausgebildeten Teilflächen 20, 21, 22, 23 unterteilt ist, die sich quadrantenartig jeweils von einer am Durchstoßpunkt 24 der zentralen Längsachse 17 der Ausnehmung 12 durch die Deckenwand liegenden Ecke bis zur inneren Umfangswand der Vertiefung 12 erstrecken. Jede dieser optisch aktiven Teilflächen 20 bis 23 ist Teil einer Parabelfläche, doch besitzt jede von ihnen einen eigenen Brennpunkt 25, 26, 27, 28. Alle diese Brennpunkte 25 bis 28 liegen auf der Längsachse 17, weisen aber in Richtung dieser Achse gegenseitige Abstände auf, wie man insbesondere den Figuren 6 und 7 entnehmen kann. Jede dieser optisch aktiven Teilflächen 20 bis 23 dient dazu, das auftreffende Licht zu bündeln, insbesondere in etwa zu parallelisieren.

Auch die innere Umfangswand des Optikkörpers angrenzend an der Ausnehmung 12 ist in vier optisch aktive, bezüglich der zentralen Längsachse 17 nicht rotationssymmetrisch ausgebildete, konkave Teilflächen 30, 31, 32, 33 unterteilt, von denen jede Teil einer Parabelfläche ist und einen eigenen Brennpunkt 35, 36, 37, 38 besitzt; auch diese Brennpunkte liegen auf der zentralen Längsachse 17 und weisen in deren Richtung gegenseitige Abstände auf.

Wie man insbesondere der Figur 3 entnehmen kann sind auch die Seitenflächen 7, 8 optisch aktiv und so geformt, dass das in das Innere des Optikkörpers 1 eingestrahlte und von innen her auf sie auftreffende Licht nicht durch sie hindurch aus dem Optikkörper 1 austreten kann, sondern durch Totalreflexion aufgespreizt und zur Lichtabstrahlfläche 6 hin geleitet wird, auf der noch eine weitere Optikstruktur ausgebildet ist, die das durch sie hindurch tretende Licht über den vertikalen und den horizontalen Winkelbereich homogenisiert und so weiter aufspreizt, dass für eine derart ausgerüsteten Fahrzeugleuchte unterschiedlichste Anbauwinkel an den verschiedensten Fahrzeugen möglich sind..

Wie die Figuren 1 und 5 zeigen, ist jede der beiden Seitenflächen 7, 8 in zwei Teilflächen 40, 41 bzw. 42, 43 unterteilt, die in Längsrichtung der Seitenflächen 7, 8 verlaufen und längs der Schnittlinien dieser Seitenflächen 7, 8 mit der Hauptzentralebene aneinander angrenzen. Jede dieser bezüglich der zentralen Längsachse 17 nicht rotationssymmetrisch ausgebildeten Teilflächen 40, 41 bzw. 42, 43 ist wieder ein Teil einer Parabelfläche. Sie weisen alle voneinander verschiedene Brennpunkte 45, 46, 47, 48 auf, die auf der zentralen Längsachse 17 der Ausnehmung 12 liegen und in Richtung dieser Achse gegenseitige Abstände aufweisen.

Bei dem hier beschriebenen Beispiel weisen all auf der zentralen Längsachse 17 liegenden Brennpunkte 25 bis 28, 35 bis 38 und 45 bis 48 gegenseitige Abstände auf, doch sind auch Ausführungsformen möglich, bei denen die Brennpunkte der ersten Gruppe jeweils mit einem der Brennpunkte der zweiten Gruppe und mit einem der Brennpunkte der dritten Gruppe zusammenfallen.

Alternativ oder ergänzend hierzu ist es auch möglich, dass zwei oder drei Brennpunkte innerhalb einer Gruppe keine gegenseitigen Abstände aufweisen.

Bevorzugt ist jedoch der erstgenannte Fall, da dieser unabhängig davon eine sehr gleichmäßige Lichtverteilung über die Lichtabstrahlfläche ermöglicht, wie weit die jeweilige LED 10 in die Ausnehmung 12 eintaucht, sodass unterschiedlichste LED-Bauformen verwendet werden können, ohne dass eine strukturelle Anpassung des erfindungsgemäßen Optikkörpers an den jeweiligen LED-Typ erforderlich wäre.

## Patentansprüche

1. Optikkörper (1) für eine Fahrzeugleuchte, der zum Einkoppeln, Weiterleiten und Abstrahlen des von einer Lichtquelle (10) in einen kegelförmigen Raumbereich abgegebenen Lichtes dient, wobei der Optikkörper (1) eine Lichtabstrahlfläche (6) und eine dieser gegenüberliegende, eine Längsachse (17) besitzende Ausnehmung (12) aufweist, in welcher die Lichtquelle (10) so positionierbar ist, dass eine Zentralachse des kegelförmigen Raumbereichs mit der Längsachse (17) der Ausnehmung (12) zusammenfällt, und wobei der Optikkörper angrenzend an der Ausnehmung (12) eine die Längsachse (17) umgebende, ringförmig geschlossene, innere Umfangswand und eine sich quer zu ihrer Längsachse (17) erstreckende Deckenwand aufweist, in der eine den Öffnungswinkel des durch sie hindurch tretenden Lichtbündels verändernde Optikstruktur ausgebildet ist, die in der Deckenwand der Ausnehmung (12) ausgebildete Optikstruktur mehrere, um den Durchstoßpunkt der Längsachse (17) der Ausnehmung (12) durch die Deckenwand herum angeordnete, optisch aktive, bezüglich der Längsachse (17) nicht rotationssymmetrisch ausgebildete Teilflächen (20, 21, 22, 23) umfasst, **dadurch gekennzeichnet, dass** jede Teilfläche (20, 21, 22, 23) einen eigenen auf der Längsachse (17) liegenden Brennpunkt (25, 26, 27, 28) aufweist, und dass die Brennpunkte (25, 26, 27, 28) von wenigstens zwei dieser Teilflächen (20, 21, 22, 23) in Richtung der Längsachse (17) einen gegenseitigen Abstand aufweisen.

2. Optikkörper (1) nach Anspruch 1, **dadurch gekennzeichnet, dass** die Optikstruktur vier unmittelbar aneinander anschließende, in etwa gleich große, die Deckenwand in vier Quadranten unterteilende Teilflächen (20, 21, 22, 23) aufweist, deren sämtliche Brennpunkte (25, 26, 27, 28) in Richtung der Längsachse (17) voneinander beabstandet sind.

3. Optikkörper (1) nach Anspruch 1 oder 2, **dadurch gekennzeichnet, dass** die Teilflächen (20, 21, 22, 23) der Deckenwand konvex in den Innenraum der Ausnehmung (12) hinein vorgewölbte, stetig ineinander übergehende Linsenflächen sind.

4. Optikkörper (1) nach einem der Ansprüche 1 bis 3, **dadurch gekennzeichnet, dass** die innere Umfangswand mehrere optisch aktive, bezüglich der Längsachse (17) nicht rotationssymmetrisch ausgebildete Teilflächen (30, 31, 32 ,33) umfasst, von denen jede einen eigenen auf der Längsachse (17) der Ausnehmung (12) liegenden Brennpunkt (35, 36, 37, 38) aufweist, und dass die Brennpunkte (35, 36, 37, 38) von wenigstens zwei dieser Teilflächen (30, 31, 32 ,33) in Richtung der Längsachse (17) einen gegenseitigen Abstand aufweisen.

5. Optikkörper (1) nach Anspruch 4, **dadurch gekennzeichnet, dass** die Umfangswand vier unmittelbar aneinander anschließende, in etwa gleich große Teilflächen (30, 31, 32 ,33) aufweist, deren sämtliche Brennpunkte (35, 36, 37, 38) in Richtung der Längsachse (17) voneinander beabstandet sind.

6. Optikkörper (1) nach Anspruch 4 oder 5, **dadurch gekennzeichnet, dass** die Teilflächen (30, 31, 32 ,33) der Umfangswand als konkave, stetig ineinander übergehende Linsenflächen ausgebildet sind.

7. Optikkörper (1) nach einem der vorhergehenden Ansprüche, **dadurch gekennzeichnet, dass** der Brennpunkt (25, 26, 27, 28) zumindest einer Teilfläche (20, 21, 22, 23) der in der Deckenwand der Ausnehmung (12) ausgebildeten Optikstruktur mit dem Brennpunkt (35, 36, 37, 38) einer der Teilflächen (30, 31, 32 ,33) der Umfangswand zusammenfällt.

8. Optikkörper (1) nach einem der vorhergehenden Ansprüche, **dadurch gekennzeichnet, dass** er plattenförmig ausgebildet ist und zwei einander bezüglich einer Hauptzentralebene gegenüberliegende Hauptflächen (3, 4) aufweist, die durch Seitenflächen miteinander verbunden sind, wobei eine der Seitenflächen die Lichtabstrahlfläche (6) bildet, während die gegenüberliegende Seitenfläche nur von schmalen, die Ausnehmung (12) umgebenden Randbereichen (14, 15) gebildet ist, von denen ausgehend sich zwei weitere Seitenflächen (7, 8) in Richtung der Lichtabstrahlfläche (6) erstrecken und so geformt sind, dass sie als Lichtleitflächen dienen, die das in den Optikkörper (1) eingekoppelte, von innen her auf sie auftreffende Licht durch Totalreflexion zur Lichtabstrahlfläche (6) weiterleiten.

9. Optikkörper (1) nach Anspruch 8, **dadurch gekennzeichnet, dass** jede der beiden weiteren Seitenflächen (7, 8) zwei sich in ihrer Längsrichtung erstreckende Teilflächen (40, 41 bzw. 42, 43) umfasst, die längs der der Schnittlinien der weiteren Seitenflächen (7, 8) mit der Hauptzentralebene aneinander angrenzen und von denen jede als Teil einer nach außen konvexen parabolischen Fläche mit einem auf der Längsachse (17) der Ausnehmung (12) liegenden Brennpunkt (45, 46, 47, 48) ausgebildet ist, wobei die Brennpunkte (45, 46, 47, 48) von wenigstens zwei dieser Teilflächen (40, 41 bzw. 42, 43) in Richtung der Längsachse (17) einen gegenseitigen Abstand aufweisen.

10. Optikkörper (1) nach Anspruch 9, **dadurch gekennzeichnet, dass** alle Brennpunkte (45, 46, 47, 48) der Teilflächen (40, 41 bzw. 42, 43) in Richtung der Längsachse (17) voneinander beabstandet sind.

11. Optikkörper (1) nach einem der vorhergehenden Ansprüche, **dadurch gekennzeichnet, dass** zumindest einer der Brennpunkte (25, 26, 27, 28; 35, 36, 37, 38; 45, 46, 47, 48) auf dem im Inneren der Ausnehmung (12) liegenden Abschnitt der Längsachse (17) liegt.

12. Optikkörper (1) nach einem der vorhergehenden Ansprüche, **dadurch gekennzeichnet, dass** zumindest einer der Brennpunkte (25, 26, 27, 28; 35, 36, 37, 38; 45, 46, 47, 48) auf dem außerhalb der Ausnehmung (12) liegenden Abschnitt der Längsachse (17) der Ausnehmung (12) liegt

13. Optikkörper (1) nach einem der vorhergehenden Ansprüche, **dadurch gekennzeichnet, dass** jede der optisch aktiven Teilflächen (20, 21, 22, 23; 30, 31, 32, 33; 40, 41, 42, 43) Teil einer Parabelfläche ist.

14. Optikkörper (1) nach einem der vorhergehenden Ansprüche, **dadurch gekennzeichnet, dass** auf der Lichtabstrahlfläche (6) eine das durch sie hindurch tretende Licht über den vertikalen und den horizontalen Winkelbereich homogenisierende und aufspreizende Abstrahloptik vorgesehen ist.

15. Fahrzeugleuchte, **dadurch gekennzeichnet, dass** sie wenigstens einen Optikkörper (1) nach einem der vorhergehenden Ansprüche umfasst.

16. Fahrzeugleuchte nach Anspruch 15, **dadurch gekennzeichnet, dass** sie eine Vielzahl von Optikkörpern (1) umfasst, die so angeordnet sind, dass ihre Hauptzentralebenen in einer gemeinsamen Ebene liegen und dass ihre Lichtabstrahlflächen (6) ineinander übergehen.

17. Fahrzeugleuchte nach Anspruch 15 oder 16, **dadurch gekennzeichnet, dass** die Optikkörper (1) einstückig miteinander verbunden sind.

## Claims

1. Optical body (1) for a vehicle lamp, which body serves for coupling, forwarding and emanating the light emitted by a light source (10) into a conical space area, wherein the optical body (1) comprises a light emitting surface (6) and a recess (12) being opposite thereto, said recess having a longitudinal axis (17), wherein the light source (10) can be positioned is said recess (12) such that the central axis of the conical space area coincides with the longitudinal axis (17) of the recess (12), and wherein the optical body adjoining the recess (12) has an inner circularly closed peripheral wall which surrounds the longitudinal axis (17), and a ceiling wall extending transversely to said longitudinal axis (17), in which ceiling wall an optical structure is formed changing the aperture angle of the light beam passing therethrough, wherein the optical structure formed in the ceiling wall of the recess (12) comprises several optically active partial surfaces (20, 21, 22, 23) which are arranged around the point in which the longitudinal axis (17) of the recess (12) permeates the top wall, said partial surfaces being not rotationally symmetric formed with respect to said longitudinal axis (17),
**characterized**
**in that** each of said partial surfaces has a focal point (25, 26, 27, 28) of its own lying on the longitudinal axis (17),
and **in that** the focal points (25, 26, 27, 28) of at least two of these partial surfaces (20, 21, 22, 23) have a mutual distance in the direction of the longitudinal axis (17).

2. The optical body (1) according to claim 1, **characterized in that** the optical structure has four immediately adjoining partial surfaces (20, 21, 22, 23) of approximately equal size dividing the ceiling wall in four quadrants all focal points (25, 26, 27, 28) of which are spaced apart in the direction of the longitudinal axis (17).

3. The optical body (1) according to claim 1 or 2, **characterized in that** the partial surfaces (20, 21, 22, 23) of the ceiling wall are continuously merging lens surfaces which convexly bulge into the interior of recess (12).

4. The optical body (1) according to one of claims 1 to 3, **characterized in that** the inner peripheral wall comprises several optically active partial surfaces (30, 31, 32, 33) which are not rotationally symmetric formed with respect to said longitudinal axis (17) and each of which has a focal point (35, 36, 37, 38) of its own, lying on the longitudinal axis (17) of the recess (12) and **in that** the focal points (35, 36, 37, 38) of at least two of these partial surfaces (30, 31, 32, 33) have a mutual distance in the direction of the longitudinal axis (17).

5. The optical body (1) according to claim 4, **characterized in that** the peripheral wall has four immediately adjoining partial surfaces (30, 31, 32, 33) of approximately equal sizes, all focal points (35, 36, 37, 38) of said partial surfaces being spaced apart in the direction of the longitudinal axis (17).

6. The optical body (1) according to claim 4 or 5, **characterized in that** the partial surfaces (30, 31, 32, 33) of the peripheral wall are formed as a concave continuously merging lens surfaces.

7. The optical body (1) according to any one of the preceding claims, **characterized in that** the focal point (25, 26, 27, 28) of at least one partial surface (20, 21, 22, 23) of the optical structure formed in the ceiling wall of the recess (12) coincides with the focal point (35, 36, 37, 38) of one of the partial surfaces (30, 31, 32, 33) of the peripheral wall.

8. The optical body (1) according to any one of the preceding claims, **characterized in that** it is plate-shaped and has two major surfaces (3, 4) being mutually opposite with respect to a main central plane, which major surfaces are interconnected by side surfaces, wherein one of the side surfaces is the light emitting surface (6), while the opposite side surface is just formed of narrow edge regions (14, 15) surrounding the recess (12), two further side surfaces (7, 8) extending therefrom in the direction of the light emitting surface (6) and being shaped in such a way that they serve as light-guiding surfaces, which, by total reflection, forward the light which is coupled into the optical body (1) and impinges on them from the inside to the light-emitting surface (6).

9. The optical body (1) according to claim 8, **characterized in that** each of the two further side surfaces (7, 8) comprises two part-surfaces (40, 41 and 42, 43) extending in their longitudinal direction and adjoining other one another along the cut lines of the further side surfaces (7, 8) with the main central plane and each of which is formed as a part of an outwardly convex parabolic surface with a focal point (45, 46, 47, 48) being positioned on the longitudinal axis (17) of the recess (12), wherein the focal points (45, 46, 47, 48) of at least two of these partial surfaces (40, 41 and 42, 43) have a mutual distance in the direction of the longitudinal axis (17).

10. The optical body (1) according to claim 9, **characterized in that** all focal points (45, 46, 47, 48) of the partial surfaces (40, 41 and 42, 43) are spaced from each other in the direction of the longitudinal axis (17).

11. The optical body (1) according to any one of the preceding claims, **characterized in that** at least one of the focal points (25, 26, 27, 28, 35, 36, 37, 38, 45, 46, 47, 48) is positioned on a portion of the longitudinal axis (17) which is inside the recess (12).

12. The optical body (1) according to any one of the preceding claims, **characterized in that** at least one of the focal points (25, 26, 27, 28; 35, 36, 37, 38; 45, 46, 47, 48) is positioned on a portion of the longitudinal axis (17) which is outside the recess (12).

13. The optical body (1) according to any one of the preceding claims, **characterized in that** each of the optically active partial surfaces (20, 21, 22, 23, 30, 31, 32, 33, 40, 41, 42, 43) is part of a parabolic surface.

14. The optical body (1) according to any one of the preceding claims, **characterized in that** on the light emitting surface (6) light-emitting optics are provided which homogenize and spread the light passing therethrough over a vertical and a horizontal angle range.

15. Vehicle lamp, **characterized in that** it comprises at least one optical body (1) according to any one of the preceding claims.

16. Vehicle lamp according to claim 15, **characterized in that** it comprises a plurality of optical bodies (1) which are arranged such that their main central planes lie in a common plane and that their light-emitting surfaces (6) merge into each other.

17. Vehicle lamp according to claim 15 or 16, **characterized in that** the optical bodies (1) are integrally connected to each other.

## Revendications

1. Corps optique (1) pour une lampe de véhicule, qui sert à l'injection, l'acheminement et l'émission de la lumière transmise par une source de lumière (10) dans une région spatiale conique, dans lequel le corps optique (1) présente une surface d'émission de lumière (6) et un évidement (12) se situant à l'opposé de celle-ci et possédant un axe longitudinal (17), dans lequel évidement la source de lumière (10) peut être positionnée de telle sorte qu'un axe central de la région spatiale conique coïncide avec l'axe longitudinal (17) de l'évidement (12), et dans lequel le corps optique présente, adjacentes à l'évidement (12), une paroi périphérique intérieure entourant l'axe longitudinal (17) et fermée suivant une forme annulaire, et une paroi de recouvrement s'étendant transversalement par rapport à son axe longitudinal (17), dans laquelle paroi de recouvrement est formée une structure optique modifiant l'angle d'ouverture du faisceau de lumière passant à travers elle, la structure optique formée dans la paroi de recouvrement de l'évidement (12) comprend plusieurs surfaces partielles (20, 21, 22, 23) formées en rotation non symétrique par rapport à l'axe longitudinal (17), agencées autour du point de traversée de l'axe longitudinal (17) de l'évidement (12) via la paroi de recouvrement et optiquement actives, **caractérisé en ce que** chaque surface partielle (20, 21, 22, 23) présente un point focal (25, 26, 27, 28) personnel se situant sur l'axe longitudinal (17), et **en ce que** les points focaux (25, 26, 27, 28) d'au moins deux de ces surfaces partielles (20, 21, 22, 23) présentent une distance réciproque dans la direction de l'axe longitudinal (17).

2. Corps optique (1) selon la revendication 1, **caractérisé en ce que** la structure optique présente quatre surfaces partielles (20, 21, 22, 23) d'environ la même taille subdivisant la paroi de recouvrement en quatre quadrants, immédiatement à la suite les unes des autres, surfaces partielles dont tous les points focaux (25, 26, 27, 28) sont espacés les uns des autres dans la direction de l'axe longitudinal (17).

3. Corps optique (1) selon la revendication 1 ou 2, **caractérisé en ce que** les surfaces partielles (20, 21, 22, 23) de la paroi de recouvrement sont des surfaces de lentille se fondant les unes dans les autres de façon continue, bombées de façon convexe vers l'espace intérieur de l'évidement (12).

4. Corps optique (1) selon l'une des revendications 1 à 3, **caractérisé en ce que** la paroi périphérique intérieure comprend plusieurs surfaces partielles (30, 31, 32, 33) formées en rotation non symétrique par rapport à l'axe longitudinal (17) et optiquement actives, desquelles chacune présente un point focal (35, 36, 37, 38) personnel se situant sur l'axe longitudinal (17) de l'évidement (12), et **en ce que** les points focaux (35, 36, 37, 38) d'au moins deux de ces surfaces partielles (30, 31, 32, 33) présentent une distance réciproque dans la direction de l'axe longitudinal (17).

5. Corps optique (1) selon la revendication 4, **caractérisé en ce que** la paroi périphérique présente quatre surfaces partielles (30, 31, 32, 33) d'environ la même taille et immédiatement à la suite les unes des autres, dont tous les points focaux (35, 36, 37, 38) sont espacés les uns des autres dans la direction de l'axe longitudinal (17).

6. Corps optique (1) selon la revendication 4 ou 5, **caractérisé en ce que** les surfaces partielles (30, 31, 32, 33) de la paroi périphérique sont formées en tant que surfaces de lentille concaves se fondant les unes dans les autres de façon continue.

7. Corps optique (1) selon l'une des revendications précédentes, **caractérisé en ce que** le point focal (25, 26, 27, 28) d'au moins une surface partielle (20, 21, 22, 23) de la structure optique formée dans la paroi de recouvrement de l'évidement (12) coïncide avec le point focal (35, 36, 37, 38) de l'une des surfaces partielles (30, 31, 32, 33) de la paroi périphérique.

8. Corps optique (1) selon l'une des revendications précédentes, **caractérisé en ce qu'**il est en forme de plaque et présente deux surfaces principales (3, 4) opposées l'une à l'autre par rapport à un plan central principal et raccordées ensemble par des surfaces latérales, dans lequel l'une des surfaces latérales forme la surface d'émission de lumière (6) tandis que la surface latérale opposée est formée uniquement de minces régions de bord (14, 15) entourant l'évidement (12), à partir desquelles deux autres surfaces latérales (7, 8) s'étendent dans la direction de la surface d'émission de lumière (6) et sont formées de telle sorte qu'elles servent de surfaces d'acheminement de la lumière qui acheminent, par une réflexion totale jusqu'à la surface d'émission de lumière (6), la lumière injectée dans le corps optique (1) et passant depuis l'intérieur vers elles.

9. Corps optique (1) selon la revendication 8, **caractérisé en ce que** chacune des deux autres surfaces latérales (7, 8) comprend deux surfaces partielles (40, 41, et/ou 42, 43) s'étendant dans leur direction longitudinale, qui sont adjacentes l'une à l'autre avec le plan central principal le long de la ligne de coupe des autres surfaces latérales (7, 8), et dont chacune est formée en tant que partie d'une surface parabolique convexe vers l'extérieur avec un point focal (45, 46, 47, 48) se situant sur l'axe longitudinal (17) de l'évidement (12), dans lequel les points focaux (45, 46, 47, 48) d'au moins deux de ces surfaces partielles (40, 41, et 42, 43) présentent une distance réciproque dans la direction de l'axe longitudinal (17).

10. Corps optique (1) selon la revendication 9, **caractérisé en ce que** tous les points focaux (45, 46, 47, 48) des surfaces partielles (40, 41, et 42, 43) sont espacés les uns des autres dans la direction de l'axe longitudinal (17).

11. Corps optique (1) selon l'une des revendications précédentes, **caractérisé en ce qu'**au moins l'un des points focaux (25, 26, 27, 28 ; 35, 36, 37, 38 ; 45, 46, 47, 48) se situe sur le tronçon de l'axe longitudinal (17) se situant à l'intérieur de l'évidement (12).

12. Corps optique (1) selon l'une des revendications précédentes, **caractérisé en ce qu'**au moins l'un des points focaux (25, 26, 27, 28 ; 35, 36, 37, 38 ; 45, 46, 47, 48) se situe sur le tronçon de l'axe longitudinal (17) se situant à l'extérieur de l'évidement (12).

13. Corps optique (1) selon l'une des revendications précédentes, **caractérisé en ce que** chacune des surfaces partielles (20, 21, 22, 23 ; 30, 31, 32, 33 ; 40, 41, 42, 43) optiquement actives fait partie d'une surface parabolique.

14. Corps optique (1) selon l'une des revendications précédentes, **caractérisé en ce que** sur la surface d'émission de lumière (6) est prévue une optique d'émission homogénéisant et déployant la lumière passant à travers elle par-dessus la région angulaire verticale et horizontale.

15. Lampe de véhicule, **caractérisée en ce qu'**elle comprend au moins un corps optique (1) selon l'une des revendications précédentes.

16. Lampe de véhicule selon la revendication 15, **caractérisée en ce qu'**elle comprend une pluralité de corps optiques (1) qui sont agencés de telle sorte que leurs plans centraux principaux se situent dans un plan commun et **en ce que** leurs surfaces d'émission de lumière (6) se fondent les unes dans les autres.

17. Lampe de véhicule selon la revendication 15 ou 16, **caractérisée en ce que** les corps optiques (1) sont raccordés d'un seul tenant les uns aux autres.
